# EUROPEAN PATENT APPLICATION

(11) **EP 4 266 531 A1**
(43) Date of publication of application: **25.10.2023**
(21) Application number: 21906893.9
(22) Date of filing: 18.11.2021
(51) Int. Cl.: H02J 7/00, H02J 7/02, H02J 3/32, H01M 50/298, H01M 10/42

(54) **BATTERY PARALLEL WIRE CONNECTION STRUCTURE OF ENERGY STORAGE SYSTEM**

(30) Priority: 15.12.2020 KR 20200175474
(71) Applicant: Hanwha Solutions Corporation, Jung-gu Seoul 04541 (KR)
(72) Inventor: HWANG, Ui Seon, Seoul 08702 (KR); MIN, Jun Hong, Seoul 08844 (KR)
(74) Representative: Mooser, Sebastian Thomas
(86) International application number: PCT/KR2021/016955
(87) International publication number: WO 2022/131588

(57) **Abstract**

The present invention relates to a battery parallel wire connection structure of an energy storage system, the system comprising: a power converter provided to select a power line from among a plurality of power lines to supply power; and a plurality of battery managers that are sequentially connected to the power converter and are operated by the power selectively supplied through the power line selected from among the plurality of power lines, wherein the power converter includes a power output port, each of the battery managers includes a power input port and a power output port, and the power input port and the power output port of the battery manager include a power supply port and a plurality of bypass ports, and may be internally wire-connected so that one of the bypass ports of the power input port is connected to the power supply port of the power output port.

## Description

### CROSS-REFERENCE TO RELATED APPLICATION

This application claims priority to and the benefit of Korean Patent Application No. 10-2020-0175474, filed on December 15, 2020, the disclosure of which is incorporated herein by reference in its entirety.

### [Technical Field]

The present invention relates to a battery parallel wire connection structure of an energy storage system, and more specifically to a battery wire connection structure which is capable of preventing errors and damage during system installation.

### [Background Art]

An energy storage system (ESS) is applied to renewable energy generation with a non-uniform charge amount, stores the generated surplus power, and serves to supplement when the amount of power generation is insufficient compared to the amount of power in the load stage.

The ESS conventionally uses lithium-ion batteries connected in parallel, and a battery management system is applied to each battery to detect the state of the battery and communicate with the upper power conversion system.

In general, a battery management system (BMS) operates by receiving power from a power transmission system, and it is connected to a power line which receives power and a communication line for communication.

That is, each of a plurality of batteries must be connected with the power conversion system, communication line and power line, and the operator must connect each line when installing the ESS.

In this case, since the number of wire connections increases according to the number of batteries, if the wire connection is erroneous due to the operator's error, damage to the system may occur, and the installation work time may be delayed.

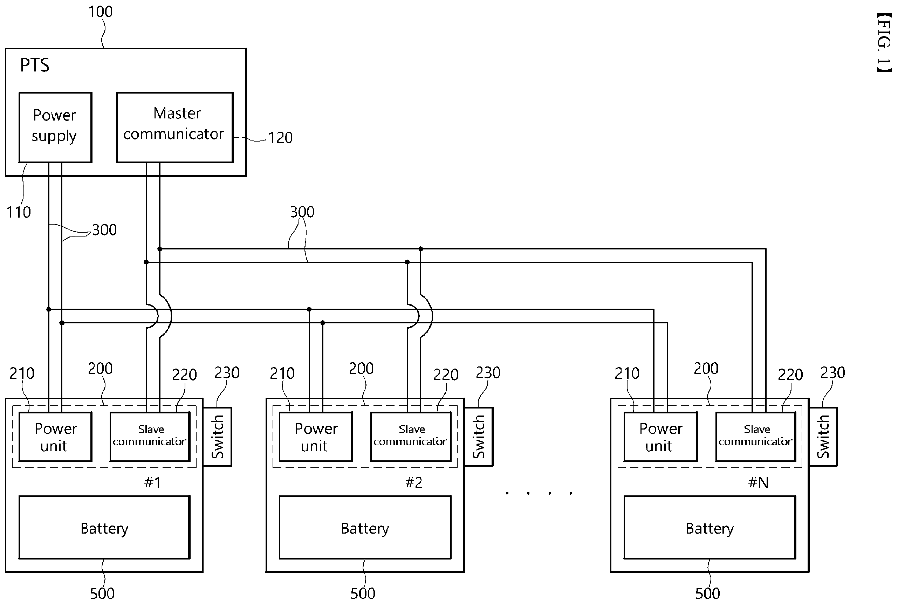

FIG. 1 shows a conventional battery parallel wire connection structure.

Referring to FIG. 1, the battery parallel wire connection structure of the conventional ESS shows the connection structure of a power conversion system 100 and the power lines and communication lines of a plurality of battery management systems 200.

The power conversion system 100 includes a power supply 110 for supplying PV or power of a power grid to a plurality of battery management systems 200, and a master communicator 120 for communicating with each of the battery management systems 200.

In addition, each of the plurality of battery management systems 200 includes a power unit 210 for receiving power from the power supply 110 through a parallel power line 300, a slave communicator 220 which is connected to the master communicator 120 through a parallel communication line 400 to provide information such as a battery state, and a switch 230 for setting an ID of the slave communicator 220.

The conventional wire connection method having such a structure will be described in more detail.

The power conversion system 100 is a system for converting DC/DC power between the PV and the battery 500 or AC/DC power between the power grid and the battery 500, and as described above, it includes a power supply for supplying power to each of the battery management systems 200.

The power of the power supply 110 is supplied to the power unit 210 of the battery management system 200, which manages the battery 500 of each storage device through the parallel power line 300.

In addition, the power conversion system 100 may perform wired communication with the slave communicators 220 of the battery management system 200 through the master communicator 120 to check the status information of the battery 500, and to this end, a parallel communication line 400 is wire-connected between the master communicator 120 and the slave communicator 220.

In this case, the operator operates the switch 230 to set the ID of each slave communicator 220.

Between the power conversion system 100 and the battery management system 200, since as many parallel communication lines 400 as the number of the battery management systems 200 are required, the operator must work to wire-connect each parallel communication line 400.

That is, it takes a lot of work time, and when the distance between the power conversion system 100 and the battery management system 200 is long or the number of the battery management systems 200 is large, the complexity of the operation is further increased.

Therefore, many cases frequently occur in which the operator makes erroneous wire connection, and products may be damaged or errors may occur due to erroneous wire connection. In addition, when a communication error occurs, the task of finding the cause and resolving the error becomes a very difficult and complex operation.

### [Disclosure]

### [Technical Problem]

The problems to be solved by the present invention in consideration of the above-described problems are directed to providing a wire connection structure which is capable of preventing erroneous wire connection.

In addition, the present invention is directed to providing a battery parallel wire connection structure of an energy storage system that can simplify the cable required to connect a battery management system, which is a slave system, from a power conversion system, which is a master system, and can automatically set an ID without using a switch.

### [Technical Solution]

The battery parallel wire connection structure of an energy storage system according to the present invention to solve the above-described technical problems includes a power converter which is provided to select a power line from among a plurality of power lines to supply power; and a plurality of battery managers that are sequentially connected to the power converter and are operated by the power which is selectively supplied through the power line selected from among the plurality of power lines, wherein the power converter includes a power output port, each of the battery managers includes a power input port and a power output port, and the power input port and the power output port of the battery manager include a power supply port and a plurality of bypass ports, and may be internally wire-connected such that one of the bypass ports of the power input port is connected to the power supply port of the power output port.

In an exemplary embodiment of the present invention, the power converter may include a power supply for supplying power; a selector for selecting one from among a plurality of power lines that are connected to a power output port of the power converter and outputting power of the power supply; and a master communicator for communication with a battery manager that is selected by the selector and supplied with power.

In an exemplary embodiment of the present invention, the internal wire connection of the battery manager may be wire-connected to a power output port of a battery manager at a position which is shifted according to a rule from the number of the power output port of the battery manager.

In an exemplary embodiment of the present invention, the rule of shift may be that the internal wire connection of all of the battery managers is the same configuration, and the external wire connection between the battery managers is shifted such that it can be wire-connected between ports having the same port number.

### [Advantageous Effects]

The present invention has the effect of preventing erroneous wire connection by connecting a communication line which is selectable in the master communicator of a power conversion system to a first battery management system and shifting the wire connection between an input terminal and an output terminal in the battery management system according to a predetermined rule.

In addition, the present invention has the effects of reducing the work time by simplifying the wire connection operation, and reducing the complexity of a communication line and a power line.

### [Description of Drawings]

FIG. 1 is a diagram illustrating the battery parallel wire connection structure of a conventional energy storage system.
FIG. 2 is a diagram illustrating the battery parallel wire connection structure of an energy storage system according to a preferred exemplary embodiment of the present invention.
FIG. 3 is a detailed diagram of the internal wire connection of the battery manager in FIG. 2.

### - Explanation of Reference Numerals -

| | | | |
|---|---|---|---|
| 10: | Power converter | 11: | Power supply |
| 12: | Master communicator | 13: | Selector |
| 14, 24, 34, 44: | Power output port | | |
| 20, 30, 40: | Battery manager | 21, 31, 41: | Power unit |
| 22, 32, 42: | Slave communicator | | |
| 23, 33, 43: | Power input port | | |
| 25, 35, 45: | First communication port | | |
| 26, 36, 46: | Second communication port | | |

### [Modes of the Invention]

In order to fully understand the configuration and effects of the present invention, preferred exemplary embodiments of the present invention will be described with reference to the accompanying drawings. However, the present invention is not limited to the exemplary embodiments disclosed below, and may be embodied in various forms, and various modifications may be made. However, the description of the present exemplary embodiments is provided so that the disclosure of the present invention is complete, and to fully inform the scope of the invention to those of ordinary skill in the art to which the present invention pertains. In the accompanying drawings, components are enlarged in size from reality for the convenience of description, and the ratios of each component may be exaggerated or reduced.

Terms such as "first," "second" and the like may be used to describe various components, but the components should not be limited by the above terms. The terms may be used only for the purpose of distinguishing one component from another component. For example, without departing from the scope of the present invention, a "first component" may be called a "second component," and similarly, a "second component" may also be called a "first component." In addition, a singular expression may include a plural expression, unless otherwise specified. The terms used in the exemplary embodiments of the present invention may be interpreted with the commonly known meaning to those of ordinary skill in the relevant technical field unless otherwise specified.

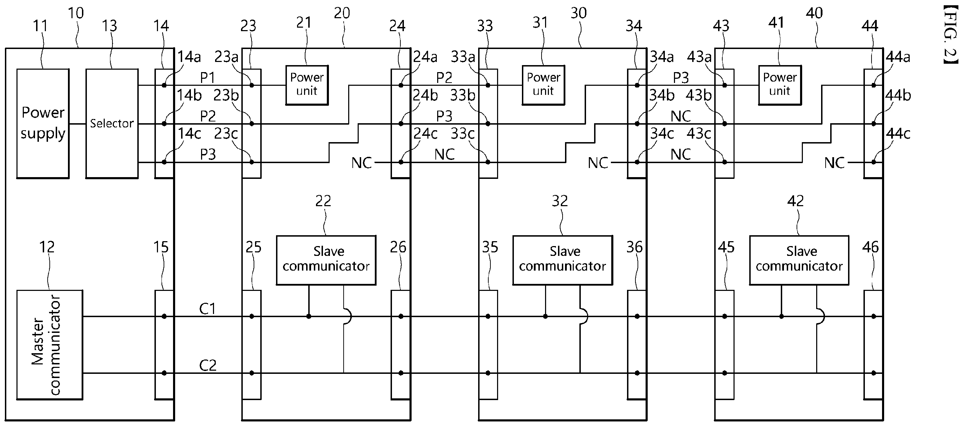

FIG. 2 is a diagram illustrating the battery parallel wire connection structure of an energy storage system according to a preferred exemplary embodiment of the present invention.

Referring to FIG. 2, the battery parallel wire connection structure of an energy storage system according to a preferred exemplary embodiment of the present invention is a configuration of supplying power to each of battery managers 20, 30, 40 by using as many power lines P1 to P3 as the number of the battery managers 20, 30, 40, which are slave devices, in a power converter 10, which is a master device.

The number of battery managers 20, 30, 40 is arbitrarily determined according to the scale of the energy storage system, and in the present invention, three battery managers 20, 30, 40 are illustrated and described for the convenience of description.

In this case, the inside of the battery manager 20, 30, 40 includes power input ports 23, 33, 43 and power output ports 24, 34, 44, and the internal wire connection is wire-connected such that the locations of the power input ports and the locations of the power output ports are shifted through a certain standard and connected to other locations.

Hereinafter, such a configuration will be described in more detail.

The power converter 10 includes a power supply 11 for supplying power to each of the battery managers 20, 30, 40, and a master communicator 12 for communicating with the battery managers 20, 30, 40.

The power line of the power supply 11 is selected and branched through a selector 13 and supplied to the power input port 23 of the first battery manager 20 through the power output port 14.

In this case, the number of ports of the power output port 14 is the same as the number of the battery managers 20, 30, 40.

The selector 13 may be parallel-connected transistors that are selectively switched by a controller (not illustrated) or switching elements corresponding thereto.

Accordingly, the battery managers 20, 30, 40 to which power is supplied are determined by the selector 13, and the controller may specify the slave communicators 22, 32, 42 through which communication is performed by confirming by which battery managers 20, 30, 40 power is currently being supplied to the master communicator 12.

That is, even if the operator does not set the ID of each slave communicator, it is possible to automatically recognize the slave communicators 22, 32, 42.

The power output port 14 includes first to third ports 14a, 14b, 14c, and first to third power lines P1, P2, P3 are connected to the first to third ports 14a, 14b, 14c, respectively.

The power input port 23 of the first battery manager 20 connected to the power converter 10 also has first to third ports 23a, 23b, 23c, and first to third power lines P1, P2, P3 are connected thereto in order, respectively.

That is, the operator uses the first to third power lines P1 to P3 to connect ports of the power input port 23 of the battery manager 20 having the same number as the port number of the power output port 14 of the power converter 10.

Therefore, it is possible to reduce the occurrence of confusion during the wire connection process, and wire connection may be easily performed.

The battery manager 20 includes a power input port 23 and a power output port 24, and a wire connection is made between the power input port 23 and the power output port 24.

Power which is input through the first port 23a of the power input port 23 of the battery manager 20 is supplied to the power unit 21 for supplying power to the battery manager 20, and power which is input through the second and third ports 23b, 23c, which are other ports, bypasses the battery manager 20 such that the rear end is connected to the power output port 24 through internal wire connection so as to be provided to the battery managers 30, 40, respectively.

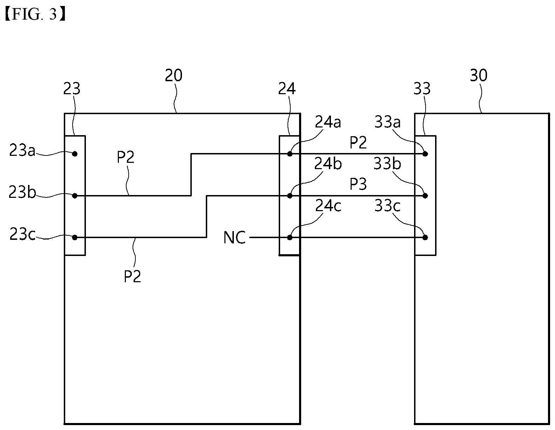

FIG. 3 is a detailed diagram of the internal wire connection of the battery manager in FIG. 2.

Referring to FIG. 3, power which is input through the first port 23a is supplied to the power unit 21 that supplies power to the battery manager 20 as described above.

Power which is input through the second port 23b is connected to the power output port 24 along the internal wire connection, and the connection at this time is wire-connected to the port position of the power output port 24 which is obtained by subtracting 1 from the number of the second port 23b.

That is, the second port 23b of the power input port 23 is wire-connected to the first port 24a of the power output port 24, and similarly, the third port 23c of the power input port 23 is wire-connected to the second port 24b of the power output port 24.

Accordingly, the third port 24c of the power output port 24 is in a state where power is not connected (denoted as NC).

By the internal wire connection of the battery manager 20 as described above, the wire connection between the battery managers 20 is simplified as a connection between the same port numbers as in the wire connection between the power converter 10 and the battery manager 20.

That is, the power input port 33 of the second battery manager 30 is connected to the power output port 24 of the first battery manager 20 by the first to third power lines P1 to P3, and in this case, wire connection is made between ports having the same number.

Specifically, the first port 24a of the power output port 24 of the battery manager 20 and the first port 33a of the power input port 33 of the battery manager 30 are connected by the first power line P1, and the second port 24b of the power output port 24 of the battery manager 20 and the second port 33b of the power input port 33 of the battery manager 30 are connected by the second power line P2.

In addition, the third port 24c of the power output port 24 of the battery manager 20 and the third port 33c of the power input port 33 of the battery manager 30 are connected by the third power line P3.

As such, in the present invention, the operation of wire connection for connecting ports having the same number (or the same location) to each other is performed, and therefore, the operation of wire connection becomes very easy.

The second battery manager 30 also has the same internal structure as the battery manager 20.

Power which is supplied through the first port 33a of the power input port 33 is supplied to the power unit 31, and power which is supplied through the second port 33b is output through the first port 34a of the power output port 34 through an internal wire connection.

In addition, the third port 33c is connected to the second port 34b of the power output port 34, and the third port 34c of the power output port 34 is not connected.

If this process is described in general, the first port 33a of the power input port 33 may be defined as a power supply port for supplying power to the power unit 31, and the remaining ports may be defined as bypass ports in a state where internal wire connection is shifted in order to connect to the power supply port of the next battery manager.

Accordingly, all of the battery managers 20 may be mass-produced with the same structure, and external wire connection may also be performed in a common manner.

Finally, the first port 34a of the power output port 34 of the second battery manager 30 is connected to the first port 43a of the power input port 43 of the third battery manager 40 by a power line, and wire connection between the second ports 34b, 43b and the second ports 34c, 43c is made in the same manner.

The power unit 41 is connected to the first port 43a of the power input port 43, which is a power supply port, and power is supplied according to the switching conversion of the selector 13.

The internal wire connection of the battery manager 40 is also the same as the previously described two battery managers 20, 30, but power is not connected to the power output port 44 in either case.

The wire connection of the power line has been described above, and communication lines C1, C2 for communication are connected to a communication port 15 of the power converter 10 and a first communication port 25 of the first battery manager 20, and also directly connected to a second communication port 26 of the battery manager 20.

In this case, the slave communicator 22 of the battery manager 20 is connected to a communication line which is branched by an internal wire connection.

Therefore, communication lines can also be easily connected without confusion through the connection between ports having the same number (or location) of each communication port.

The internal communication wire connection of the battery managers 20 has a structure in which ports having the same number are connected without a shift, unlike internal power wire connection.

In this configuration, when the power converter 10 needs to communicate with the battery manager 20 at a first position, power is supplied to the first power line P1 through the selector 13, and power is not supplied to the second power line P2 and the third power line P3.

Accordingly, the battery manager 20 in which power is supplied to the power unit 21 through the power supply line P1 is operated.

The slave communicator 22 of the battery manager 20 which is supplied with power can be identified when communicating with the master communicator 12 of the power converter 10, even if there is no separate ID setting.

This is made possible through communication or setting sharing between the controller, which controls the selector 13 of the power converter 10, and the master communicator 12.

Therefore, in the present invention, since the ID of the slave communicator 22 is set automatically without the need for the operator to separately set the ID of the slave communicator 22, the possibility of occurrence of errors may be reduced.

When the power supply state of the selector 13 is changed and power is supplied through the second power line P2 and power supplied to the first power line P1 and the third power line P3 is cut off, power is supplied to the battery manager 30 which is located at a second position.

The second power line P2 has one end connected to the second port 14b, which is the second port of the power output port 14 of the power converter 10, and the other end connected to the second port 23b of the power input port 23 of the first battery manager 20.

This is connected to the first port 24a of the power output port 24 of the battery manager 20 by shifting the internal wire connection of the battery manager 20, and since the external connection which is connected by the operator is connected between ports having the same port number, it is connected to the first port 33a of the power input port 33 of the battery manager 30.

Therefore, power is supplied to the power unit 31 of the battery manager 30, and communication is made between the slave communicator 32 of the battery manager 30 and the master communicator 12 of the power converter 10, and in this case, it can be also confirmed that current communication is being performed with the slave communicator 32 of the battery manager 30 without a separate ID setting.

As such, in the present invention, since the external wire connection performed by the operator is made by wire connection between the same port numbers, the convenience of the operation of wire connection may be improved, confusion may be reduced, and work time may be shortened. In addition, since there is no need to set each ID, it is possible to prevent the occurrence of communication errors due to setting errors by the operator.

Since the operation of the battery manager 40 which is located at a third position can be easily understood from the operation of the two battery managers 40 described above, the description of the operation will be omitted.

Although the exemplary embodiments according to the present invention have been described above, these are merely exemplary, and those of ordinary skill in the art will understand that various modifications and equivalent ranges of exemplary embodiments are possible therefrom. Accordingly, the true technical protection scope of the present invention should be defined by the following claims.

### [Industrial Applicability]

The present invention proposes a wire connection structure for preventing errors in the wire connection process of an energy storage system by using the laws of nature, and thus has industrial applicability.

## Claims

1. A battery parallel wire connection structure of an energy storage system, comprising:
a power converter which is provided to select a power line from among a plurality of power lines to supply power; and
a plurality of battery managers that are sequentially connected to the power converter and are operated by the power which is selectively supplied through the power line selected from among the plurality of power lines,
wherein the power converter includes a power output port, each of the battery managers includes a power input port and a power output port, and the power input port and the power output port of the battery manager include a power supply port and a plurality of bypass ports, and may be internally wire-connected such that one of the bypass ports of the power input port is connected to the power supply port of the power output port.

2. The battery parallel wire connection structure of claim 1, wherein the power converter comprises:
a power supply for supplying power;
a selector for selecting one from among a plurality of power lines that are connected to a power output port of the power converter and outputting power of the power supply; and
a master communicator for communication with a battery manager that is selected by the selector and supplied with power.

3. The battery parallel wire connection structure of claim 2, wherein the internal wire connection of the battery manager is wire-connected to a power output port of a battery manager at a position which is shifted according to a rule from the number of the power output port of the battery manager.

4. The battery parallel wire connection structure of claim 3, wherein the rule of shift is that the internal wire connection of all of the battery managers is the same configuration, and the external wire connection between the battery managers is shifted such that it can be wire-connected between ports having the same port number.
